# EUROPÄISCHE PATENTSCHRIFT

(11) **EP 2 667 592 B1**
(45) Veröffentlichungstag und Bekanntmachung des Hinweises auf die Patenterteilung: **21.03.2018**
(21) Anmeldenummer: 13168687.5
(22) Anmeldetag: 22.05.2013
(51) Int. Cl.: H04N 21/442, H04N 21/482, H04N 21/45, H04N 5/44, H04N 5/445

(54) **Verfahren zum Betrieb einer Multimedia-Einrichtung, Multimedia-Einrichtung mit biometrischem Sensor, Computerprogramm und Computerprogramm-Produkt**
Method for operating a multimedia device, multimedia device comprising a biometric sensor, computer program and computer program product
Procédé de fonctionnement d'un dispositif multimédia, dispositif multimédia pourvu d'un capteur biométrique, programme informatique et produit de programme informatique

(30) Priorität: 23.05.2012 DE 102012010091
(43) Veröffentlichungstag der Anmeldung: 27.11.2013
(73) Patentinhaber: Deutsche Telekom AG, 53113 Bonn (DE)
(72) Erfinder: Lonczewski, Frank, 58453 Witten (DE)
(74) Vertreter: Schwöbel, Thilo K.

(56) Entgegenhaltungen:
- EP-A2- 2 360 610
- US-A1- 2004 003 392
- US-A1- 2009 059 090
- US-A1- 2009 133 051
- US-A1- 2009 138 907
- US-A1- 2011 221 622
- Anonymous: "Vein scanner, shrunk", The H Security: News and Features , 29. April 2011 (2011-04-29), XP002707710, Gefunden im Internet: URL:http://www.h-online.com/security/news/ item/Vein-scanner-shrunk-1231462.html [gefunden am 2012-07-26]

## Beschreibung

### Stand der Technik

Die Erfindung betrifft ein Verfahren zum Betrieb einer Multimedia-Einrichtung, wobei die Multimedia-Einrichtung eine Steuerungseinrichtung aufweist und wobei die Multimedia-Einrichtung wenigstens eine Anzeigeeinrichtung aufweist oder dieser zugeordnet ist.

Die Erfindung betrifft ferner eine Multimedia-Einrichtung mit einer Steuerungseinrichtung, wobei die Multimedia-Einrichtung wenigstens eine Anzeigeeinrichtung aufweist oder dieser zugeordnet ist.

Im Stand der Technik sind Multimedia-Einrichtungen bekannt, insbesondere in Form von Multimedia-Empfängern (auch Multimedia-Receiver genannt), etwa in Form von sogenannten Set-Top-Boxen, die zusammen mit einem Fernsehgerät bzw. einer sonstigen Anzeigeeinrichtung betreibbar sind und die typischerweise Bewegtbildinhalte wie etwa Live-Fernsehkanäle oder Video on Demand (VoD-Inhalte) sowie weitere Medieninhalte wie etwa Töne, Bilder, Nachrichten oder dergleichen zur Verfügung stellen können. Hierbei überfordert typischerweise die Menge und Vielfalt der angebotenen Fernsehkanäle bzw. VoD-Inhalte einen Benutzer, so dass typischerweise für eine sinnvolle Nutzung der angebotenen Inhalte eine Empfehlungsfunktionalität benötigt wird.

Bedeutsam ist in dieser Hinsicht, dass die Qualität der Empfehlung erheblich dadurch verbessert werden kann, dass diese individuell auf den jeweiligen Nutzer des Produkts zugeschnitten wird. Hierfür ist es erforderlich, eine Identifikation der jeweils mit dem Produkt interagierenden Person vorzunehmen.

Bei bisher verwendeten Realisierungen ist hierzu jedoch immer eine vergleichsweise störende bzw. lästige Benutzerinteraktion erforderlich, was die Benutzung der Bewegtbildinhalte entweder beeinträchtigt oder einen Benutzer zumindest zeitweise davon ablenkt. Die Druckschriften US 2009/138907 A1, US 2009/059090 A1, US 2011/221622 A1, US 2004/003392 A1 und US 2009/133051 A1 offenbaren verschiedene Lösungen zur benutzerindividuellen bzw. zum gruppenindividuellen Betrieb von Multimedia-Einrichtungen. Die Druckschrift EP2360610 A2, sowie der Internetartikel "Vein scanner, shrunk", vom 29. April 2011 (2011-04-29), URL:http://www.h-online.com/security/news/item/Vein-scanner-shrunk-1231462.html, offenbaren die Verwendung eines Venenscanners als biometrischen Sensor.

### Offenbarung der Erfindung

Der Erfindung liegt die Aufgabe zugrunde, ein Verfahren zum Betrieb einer Multimedia-Einrichtung bereitzustellen, welches die Nachteile des Standes der Technik nicht aufweist und eine einfache, schnelle und sichere, insbesondere personenindividuelle, Nutzeridentifikation zu ermöglichen, um die Benutzung einer Multimedia-Einrichtung gemäß der vorliegenden Erfindung bzw. um das Verfahren zum Betrieb der Multimedia-Einrichtung möglichst effizient zu gestalten. Diese Aufgabe wird erfindungsgemäß gelöst durch ein Verfahren und eine Multimedia-Einrichtung gemäß den angefügten Patentansprüchen. Es ist hierdurch gemäß der vorliegenden Erfindung in vorteilhafter Weise möglich, dass ein erster Betriebsmodus und ein weiterer Betriebsmodus der Multimedia-Einrichtung möglich ist, wobei der erste Betriebsmodus ein benutzerindividueller Betriebsmodus ist und wobei der weitere Betriebsmodus keinem Benutzer der Multimedia-Einrichtung benutzerindividuell zugeordnet ist.

Die Multimedia-Einrichtung weist erfindungsgemäß die Anzeigeeinrichtung entweder auf oder die Anzeigeeinrichtung ist der Multimedia-Einrichtung zugeordnet. Typischerweise handelt es sich bei der Anzeigeeinrichtung um ein Fernsehgerät oder um eine sonstige Anzeigeeinrichtung wie etwa ein Computermonitor oder dergleichen. Bei der Multimedia-Einrichtung handelt es sich erfindungsgemäß insbesondere um einen Multimedia-Empfänger (auch Multimedia-Receiver bzw. Set-Top-Box genannt). Die Multimedia-Einrichtung ist über eine Datenschnittstelle mit einem Telekommunikationsnetz verbunden und empfängt über die Datenschnittstelle von dem Telekommunikationsnetz Multimedia-Daten, die über die Anzeigeeinrichtung für einen oder mehrere Benutzer zur Anzeige gebracht werden, wobei die Anzeigeeinrichtung typischerweise auch Ton- oder Sprachausgabeeinrichtungen aufweist bzw. solche Ton- oder Sprachausgabeeinrichtungen der Anzeigeeinrichtung zugeordnet sind. Zwischen dem Telekommunikationsnetz und der Multimedia-Einrichtung ist erfindungsgemäß bevorzugt ein physikalischer Kommunikationskanal vorgesehen, der über die Datenschnittstelle verläuft und der typischerweise eine Verbindung zwischen einem Zugangsknoten des Telekommunikationsnetzes und einem integrierten Zugangsgerät umfasst, wobei das integrierte Zugangsgerät als ein Gerät zu verstehen ist, welches typischerweise in einem Gebäude oder in einer Wohnung des Endkunden lokalisiert ist, beispielsweise als sogenanntes Heim-Gateway bzw. in Form eines sogenannten Routers. Erfindungsgemäß kann es vorgesehen sein, dass die Funktionalität des integrierten Zugangsgeräts ebenfalls in der Multimedia-Einrichtung integriert ist oder aber separat von der Multimedia-Einrichtung vorgesehen ist. Erfindungsgemäß wird zwischen der Multimedia-Einrichtung und dem Telekommunikationsnetz eine Internetprotokoll-Konnektivität (auch IP-Konnektivität) hergestellt. Bevorzugt ist die Datenschnittstelle zwischen dem Telekommunikationsnetz und der Multimedia-Einrichtung drahtgebunden oder mittels einer WLAN (Wireless Local Area Network) Schnittstelle vorgesehen, wobei jedoch auch ein Mobilfunk-Kommunikationsnetz als Telekommunikationsnetz für die erfindungsgemäße Multimedia-Einrichtung bzw. für das erfindungsgemäße Verfahren vorgesehen sein kann, beispielsweise ein Mobilfunk-Kommunikationsnetz gemäß der zweiten Generation von Mobilfunknetzen (2G) und/oder gemäß der dritten Generation von Mobilfunknetzen (3G) und/oder gemäß der vierten Generation von Mobilfunknetzen (4G).

Die Steuerungseinrichtung der erfindungsgemäßen Multimedia-Einrichtung bzw. die beim erfindungsgemäßen Verfahren zum Betrieb einer Multimedia-Einrichtung genutzt wird, ist erfindungsgemäß insbesondere als klassische Fernbedienung für die Anzeigeeinrichtung oder für die Multimedia-Einrichtung vorgesehen. Die Steuereinrichtung kann jedoch alternativ auch in Form einer Tastatur (Keyboard), in Form eines Spielesteuerungsgeräts (Game-Controller), in Form einer Computermaus oder in Form eines tragbaren Computers wie ein Tablet-Computer oder ein Smartphone vorgesehen sein.

Erfindungsgemäß weist die Multimedia-Einrichtung einen biometrischen Sensor auf. Ferner ist der Multimedia-Einrichtung eine Erkennungseinrichtung für biometrische Daten und eine Speichereinrichtung für biometrische Daten zugeordnet, d. h. die Multimedia-Einrichtung weist die Erkennungseinrichtung für biometrische Daten und/oder die Speichereinrichtung für biometrische Daten auf oder aber die Erkennungseinrichtung für biometrische Daten und/oder die Speichereinrichtung für biometrische Daten sind außerhalb der Multimedia-Einrichtung, insbesondere in dem Telekommunikationsnetz, beispielsweise in einem Netzknoten des Telekommunikationsnetzes, welcher Speichermittel und Steuermittel sowie Kommunikationsmittel aufweist, vorhanden und entsprechende Speicher- und Datenverarbeitungskapazitäten werden der Multimedia-Einrichtung bei Bedarf zur Verfügung gestellt.

Sowohl beim erfindungsgemäßen Verfahren zum Betrieb einer Multimedia-Einrichtung als auch bei der erfindungsgemäßen Multimedia-Einrichtung ist es vorgesehen, dass eine Mehrzahl von Betriebsmodi benutzt werden können, wobei verschiedene Betriebsmodi der Darstellung an der Anzeigeeinrichtung bzw. der Aussendung von der Multimedia-Einrichtung von verschiedenen Auswahlinformationen entsprechen. Die Auswahlinformationen können beispielsweise eine Empfehlungsfunktionalität realisieren.

Gemäß einer bevorzugten Ausführungsform des erfindungsgemäßen Verfahrens ist vorgesehen, dass die Multimedia-Einrichtung in einem zweiten Betriebsmodus betreibbar ist, wobei im zweiten Betriebsmodus eine zweite Auswahlinformation an der Anzeigeeinrichtung dargestellt oder von der Multimedia-Einrichtung ausgesendet wird, wobei in der Speichereinrichtung für biometrische Daten ein zweiter Datensatz biometrischer Daten gespeichert ist, wobei der zweite Datensatz biometrischer Daten einer zweiten Person zugeordnet ist,
-- wobei die Multimedia-Einrichtung im zweiten Betriebsmodus betrieben wird für den Fall
   -- einer Benutzung der Steuerungseinrichtung und,
   -- einer Erkennung, unter Benutzung des biometrischen Sensors, von dem zweiten Datensatz biometrischer Daten zuordenbarer biometrischer Daten durch die Erkennungseinrichtung und
-- wobei die Multimedia-Einrichtung im weiteren Betriebsmodus betrieben wird für den Fall
   -- einer Benutzung der Steuerungseinrichtung und,
   -- einer Erkennung, unter Benutzung des biometrischen Sensors, von dem ersten und zweiten Datensatz biometrischer Daten verschiedener biometrischer Daten durch die Erkennungseinrichtung.

Es ist hierdurch erfindungsgemäß in besonders bevorzugter Weise möglich, dass sowohl für eine erste Person als auch für die zweite Person ein benutzerindividueller Betrieb der Multimedia-Einrichtung ermöglicht wird.

Erfindungsgemäß ist es ferner bevorzugt, dass die Multimedia-Einrichtung in einem dritten Betriebsmodus betreibbar ist, wobei im dritten Betriebsmodus eine dritte Auswahlinformation an der Anzeigeeinrichtung dargestellt oder von der Multimedia-Einrichtung ausgesendet wird,
-- wobei die Multimedia-Einrichtung im dritten Betriebsmodus betrieben wird für den Fall
   -- einer Benutzung der Steuerungseinrichtung und,
   -- einer Erkennung, unter Benutzung des biometrischen Sensors und innerhalb eines vorgegebenen Zeitintervalls, von sowohl dem ersten Datensatz biometrischer Daten als auch dem zweiten Datensatz biometrischer Daten zuordenbarer biometrischer Daten durch die Erkennungseinrichtung.

Erfindungsgemäß ist es hierdurch besonders vorteilhaft möglich, dass neben dem benutzerindividuellen, d. h. personenindividuellen, Betrieb der Multimedia-Einrichtung auch ein personengruppenindividueller Betrieb der Multimedia-Einrichtung möglich ist, so dass die erste Auswahlinformation angezeigt bzw. ausgesendet wird, wenn lediglich der erste Datensatz biometrischer Daten (innerhalb eines vorgegebenen Zeitintervalls) erkannt wird, dass zweite Auswahlinformationen dargestellt oder ausgesendet werden, wenn der zweite Datensatz biometrischer Daten erkannt wird und dass die dritte Auswahlinformation ausgesendet oder dargestellt wird, wenn innerhalb des vorgegebenen Zeitintervalls sowohl die ersten als auch die zweiten biometrischen Daten erkannt werden. Hierbei ist es erfindungsgemäß bevorzugt vorgesehen, dass das vorgegebene Zeitintervall im Bereich von einigen Sekunden oder Minuten liegt.

Erfindungsgemäß ist es weiterhin bevorzugt, dass mittels des biometrischen Sensors ein im Vergleich zur Fläche eines menschlichen Fingerabdrucks großflächiges biometrisches Merkmal herangezogen wird, insbesondere die Venenstruktur eines Körperabschnitts oder ein Teil der Struktur der Hautoberfläche.

Es ist hierdurch in besonders einfacher und sicherer Weise möglich, eine Identifikation der jeweils mit der Multimedia-Einrichtung interagierenden Person vorzunehmen. Erfindungsgemäß ist es lediglich notwendig, dass die die Multimedia-Einrichtung benutzende Person ganz intuitiv, beispielsweise mit einer natürlich wirkenden Handlung eine Fernbedienung, d. h. beispielsweise die Steuerungseinrichtung, in die Hand nimmt und beginnt, mit der Multimedia-Einrichtung zu interagieren. Hierbei ist es erfindungsgemäß vorteilhaft möglich, dass die Identifikation der handelnden Person dadurch ermöglicht wird, dass die Person wie gewohnt mit der Multimedia-Einrichtung, insbesondere der Steuerungseinrichtung in Form einer Fernbedienung, interagiert.

Erfindungsgemäß ist es ferner bevorzugt, dass der biometrische Sensor in der Steuereinrichtung vorgesehen ist. Hierdurch ist die Steuereinrichtung, insbesondere als Fernbedienung, besonders intuitiv benutzbar und zum Zwecke des erfindungsgemäßen Verfahrens bzw. für die Benutzung der erfindungsgemäßen Multimedia-Einrichtung benutzbar.
Gemäß zweier weiterer bevorzugter Ausführungsformen ist es vorgesehen, dass die Speichereinrichtung für biometrische Daten in der Multimedia-Einrichtung insbesondere in der Steuereinrichtung vorgesehen ist bzw. dass die Speichereinrichtung für biometrische Daten Teil des Kommunikationsnetzes ist. Hierdurch kann in einfacher Weise eine schnelle und einfache Identifizierung der mit der Multimedia-Einrichtung interagierenden Person vorgenommen werden.

Die vorliegende Erfindung bezieht sich auch auf eine Multimedia-Einrichtung mit einer Steuerungseinrichtung, wobei die Multimedia-Einrichtung wenigstens eine Anzeigeeinrichtung aufweist oder dieser zugeordnet ist, wobei die Multimedia-Einrichtung konfiguriert ist über eine Datenschnittstelle von einem Telekommunikationsnetz Multimedia-Daten zu empfangen, wobei die Multimedia-Einrichtung wenigstens in einem ersten Betriebsmodus und in einem weiteren Betriebsmodus betreibbar ist, wobei die Multimedia-Einrichtung konfiguriert ist, im ersten Betriebsmodus eine erste Auswahlinformation an der Anzeigeeinrichtung darzustellen oder von der Multimedia-Einrichtung auszusenden, wobei die Multimedia-Einrichtung konfiguriert ist, im weiteren Betriebsmodus eine weitere Auswahlinformation an der Anzeigeeinrichtung darzustellen oder von der Multimedia-Einrichtung auszusenden, wobei die Multimedia-Einrichtung einen biometrischen Sensor aufweist, wobei der Multimedia-Einrichtung eine Erkennungseinrichtung für biometrische Daten und eine Speichereinrichtung für biometrische Daten zugeordnet sind, wobei in der Speichereinrichtung für biometrische Daten wenigstens ein erster Datensatz biometrischer Daten gespeichert ist, wobei der erste Datensatz biometrischer Daten einer ersten Person zugeordnet ist,
-- wobei die Multimedia-Einrichtung zum Betrieb im ersten Betriebsmodus konfiguriert ist für den Fall
   -- einer Benutzung der Steuerungseinrichtung und,
   -- einer Erkennung, unter Benutzung des biometrischen Sensors, von dem ersten Datensatz biometrischer Daten zuordenbarer biometrischer Daten durch die Erkennungseinrichtung und
-- wobei die Multimedia-Einrichtung zum Betrieb im weiteren Betriebsmodus konfiguriert ist für den Fall
   -- einer Benutzung der Steuerungseinrichtung und,
   -- einer Erkennung, unter Benutzung des biometrischen Sensors, von dem ersten Datensatz biometrischer Daten verschiedener biometrischer Daten durch die Erkennungseinrichtung.

Hierdurch ist es erfindungsgemäß in vorteilhafter Weise möglich, die Multimedia-Einrichtung flexibel an die Bedürfnisse verschiedener Nutzer anzupassen.

Erfindungsgemäß ist es insbesondere bevorzugt, dass die Multimedia-Einrichtung in einem zweiten Betriebsmodus betreibbar ist, wobei die Multimedia-Einrichtung konfiguriert ist, im zweiten Betriebsmodus eine zweite Auswahlinformation an der Anzeigeeinrichtung darzustellen oder von der Multimedia-Einrichtung auszusenden, wobei in der Speichereinrichtung für biometrische Daten ein zweiter Datensatz biometrischer Daten gespeichert ist, wobei der zweite Datensatz biometrischer Daten einer zweiten Person zugeordnet ist,
-- wobei die Multimedia-Einrichtung zum Betrieb im zweiten Betriebsmodus konfiguriert ist für den Fall
   -- einer Benutzung der Steuerungseinrichtung und,
   -- einer Erkennung, unter Benutzung des biometrischen Sensors, von dem zweiten Datensatz biometrischer Daten zuordenbarer biometrischer Daten durch die Erkennungseinrichtung und
-- wobei die Multimedia-Einrichtung zum Betrieb im weiteren Betriebsmodus konfiguriert ist für den Fall
   -- einer Benutzung der Steuerungseinrichtung und,
   -- einer Erkennung, unter Benutzung des biometrischen Sensors, von dem ersten und zweiten Datensatz biometrischer Daten verschiedener biometrischer Daten durch die Erkennungseinrichtung.

Ferner ist es erfindungsgemäß hinsichtlich der Multimedia-Einrichtung bevorzugt, dass die Multimedia-Einrichtung in einem dritten Betriebsmodus betreibbar ist, wobei die Multimedia-Einrichtung konfiguriert ist, im dritten Betriebsmodus eine dritte Auswahlinformation an der Anzeigeeinrichtung darzustellen oder von der Multimedia-Einrichtung auszusenden,
-- wobei die Multimedia-Einrichtung im dritten Betriebsmodus betrieben wird für den Fall
   -- einer Benutzung der Steuerungseinrichtung und,
   -- einer Erkennung, unter Benutzung des biometrischen Sensors und innerhalb eines vorgegebenen Zeitintervalls, von sowohl dem ersten Datensatz biometrischer Daten als auch dem zweiten Datensatz biometrischer Daten zuordenbarer biometrischer Daten durch die Erkennungseinrichtung.

Auch hinsichtlich der Multimedia-Einrichtung ist es bevorzugt, dass der biometrische Sensor konfiguriert ist, ein im Vergleich zur Fläche eines menschlichen Fingerabdrucks großflächiges biometrisches Merkmal heranzuziehen, insbesondere die Venenstruktur eines Körperabschnitts oder einen Teil der Struktur der Hautoberfläche.

Ferner ist es auch hinsichtlich der Multimedia-Einrichtung bevorzugt, dass
-- der biometrische Sensor in der Steuerungseinrichtung vorgesehen bzw.
-- die Speichereinrichtung für biometrische Daten Teil des Kommunikationsnetzes ist oder in der Multimedia-Einrichtung, insbesondere in der Steuereinrichtung, vorgesehen ist.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung oder einer Multimedia-Einrichtung ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung oder einer Multimedia-Einrichtung ausgeführt wird.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch ein Beispiel eines Telekommunikationsnetzes und einer Multimedia-Einrichtung mit einer Anzeigeeinrichtung und einer Steuerungseinrichtung.
- **Figur 2**: zeigt schematisch ein Anwendungsszenario der erfindungsgemäßen Multimedia-Einrichtung bzw. des erfindungsgemäßen Verfahrens.
- **Figur 3**: zeigt eine schematische Darstellung einer Steuerungseinrichtung mit einem vergrößerten Abschnitt eines Beispiels eines biometrischen Sensors.
- **Figuren 4 bis 7**: zeigen schematisch verschiedene Betriebsmodi der erfindungsgemäßen Multimedia-Einrichtung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

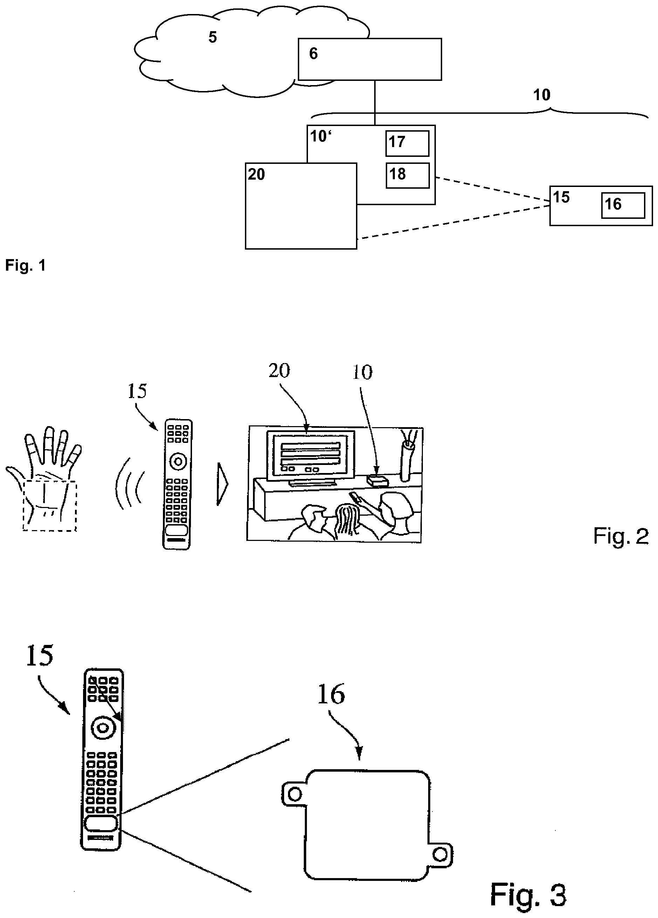

In Figur 1 ist ein Beispiel eines Telekommunikationsnetzes 5 mit einer über eine Datenschnittstelle 6 angeschlossenen Multimedia-Einrichtung 10 schematisch wiedergegeben. Ferner stellt Figur 1 eine Anzeigeeinrichtung 20 sowie eine Steuerungseinrichtung 15 dar. Die Steuerungseinrichtung 15 wird erfindungsgemäß als Teil der Multimedia-Einrichtung 10 aufgefasst, wobei die Multimedia-Einrichtung 10 ein Basisgerät 10' aufweisen kann, das mit der Steuerungseinrichtung 15 beispielsweise über eine Infrarot-Schnittstelle oder über eine Funkschnittstelle in Verbindung steht. Die Anzeigeeinrichtung 20 ist ebenfalls als Teil der Multimedia-Einrichtung 10 mit dieser (bzw. mit dem Basisgerät 10') integriert (bzw. es ist die Multimedia-Einrichtung 10 bzw. dessen Basisgerät 10' in die Anzeigeeinrichtung 20 integriert) oder aber die Anzeigeeinrichtung 20 ist separat von der Multimedia-Einrichtung 10 vorgesehen, jedoch ist die Anzeigeeinrichtung 20 der Multimedia-Einrichtung 10 zugeordnet. Im Beispiel der Figur 1 weist die Steuerungseinrichtung 15 - und damit die Multimedia-Einrichtung 10 - einen Sensor 16 auf.

Ferner weist die Multimedia-Einrichtung 10 (bzw. deren Basisgerät 10') eine Erkennungseinrichtung 17 für biometrische Daten und eine Speichereinrichtung 18 für biometrische Daten auf. Alternativ zu einer solchen Ausführungsform ist es jedoch erfindungsgemäß auch möglich, dass der biometrische Sensor 16 nicht in der Steuerungseinrichtung 15, sondern außerhalb der Steuerungseinrichtung 15, d.h. im Basisgerät 10' der Multimedia-Einrichtung 10, angeordnet ist (nicht dargestellt). Ferner kann es erfindungsgemäß vorgesehen sein (ebenfalls nicht dargestellt), dass die Erkennungseinrichtung 17 für biometrische Daten und/oder die Speichereinrichtung 18 für biometrische Daten nicht in der Multimedia-Einrichtung 10 bzw. als Teil der Multimedia-Einrichtung 10 vorgesehen ist, sondern entweder in einem in Figur 1 nicht dargestellten Zugangsgerät, insbesondere ein integriertes Zugangsgerät, oder aber als Teil des Telekommunikationsnetzes 5, beispielsweise realisiert in einem Netzknoten, welcher sowohl Steuermittel als auch Speichermittel aufweist. Ferner kann es erfindungsgemäß vorgesehen sein (ebenfalls nicht dargestellt), dass die Erkennungseinrichtung 17 für biometrische Daten und/oder die Speichereinrichtung 18 für biometrische Daten in der Steuerungseinrichtung 15 (und nicht im Basisgerät 10' der Multimedia-Einrichtung 10) vorgesehen ist.

In Figur 2 ist ein beispielhaftes Anwendungsszenario des erfindungsgemäßen Verfahrens bzw. der erfindungsgemäßen Multimedia-Einrichtung 10 schematisch dargestellt. Ein Körperteil, insbesondere eine Hand, eines Benutzers weist einen mit gestrichelter Linie schematisch bezeichneten Bereich auf, welcher ein biometrisches Merkmal aufweist, welches im Vergleich zur Fläche eines menschlichen Fingerabdrucks ein großflächiges biometrisches Merkmal ist und welches mittels eines Sensors - nämlich dem biometrischen Sensor 16 - erkennbar ist. Insbesondere handelt es sich bei diesem großflächigen biometrischen Merkmal beispielsweise um die Venenstruktur eines Körperabschnitts oder um einen Teil der Struktur der Hautoberfläche. Durch Interaktion des Benutzers mit der Steuerungseinrichtung 15 wird ein Betriebsmodus der Multimedia-Einrichtung aus einer Mehrzahl von möglichen Betriebsmodi der Multimedia-Einrichtung 10 ausgewählt.

Beispielsweise kann der biometrische Sensor 16 zur Erfassung spektraler Eigenschaften der Haut sowie darunter liegender Gewebeschichten ausgebildet sein und in seinem Erkennungsbereich bzw. Wirkbereich auf einen Nahbereich, insbesondere weniger als 50 cm, beschränkt sein. Der erfindungsgemäße Bezug auf ein biometrisches Merkmal, welches im Vergleich zur Fläche eines menschlichen Fingerabdrucks ein großflächiges biometrisches Merkmal ist, bringt den Vorteil mit sich, dass eine Erkennung trotz etwaigem auf der Haut des Benutzers vorhandenem Schmutz eine sichere Erkennung möglich ist. Auch in diesem Zusammenhang ist es erfindungsgemäß von Vorteil, dass ein großflächiges biometrisches Merkmal zur eindeutigen Identifikation eines Benutzers herangezogen wird. Der biometrische Sensor 16 weist insbesondere eine Strahlungsquelle zur Abgabe von elektromagnetischer Strahlung auf (bzw. ist einer Strahlungsquelle zugeordnet), so dass wenigstens eine Art eines relativ großflächigen Merkmals mittels des biometrischen Sensors 16 erkennen lässt, beispielsweise die Oberflächenstruktur der Haut (in diesem Fall ist es sinnvoll, dass die elektromagnetische Strahlung (zumindest auch) im Wellenlängenbereich von 350 nm bis 780 nm ausgestrahlt wird) oder die Venenstruktur (in diesem Fall ist es sinnvoll, dass die elektromagnetische Strahlung (zumindest auch) im Wellenlängenbereich von 750 nm bis 1400 nm ausgestrahlt wird, so dass die oberen Hautschichten von dieser Strahlung durchdrungen werden und somit die Beleuchtung tiefer liegender Merkmale, insbesondere die Venenstruktur, ermöglicht wird).

In Figur 3 ist schematisch die Steuerungseinrichtung 15 zusammen mit einem vergrößerten Abschnitt eines biometrischen Sensors 16, der insbesondere als Venenscanner ausgebildet ist, dargestellt.

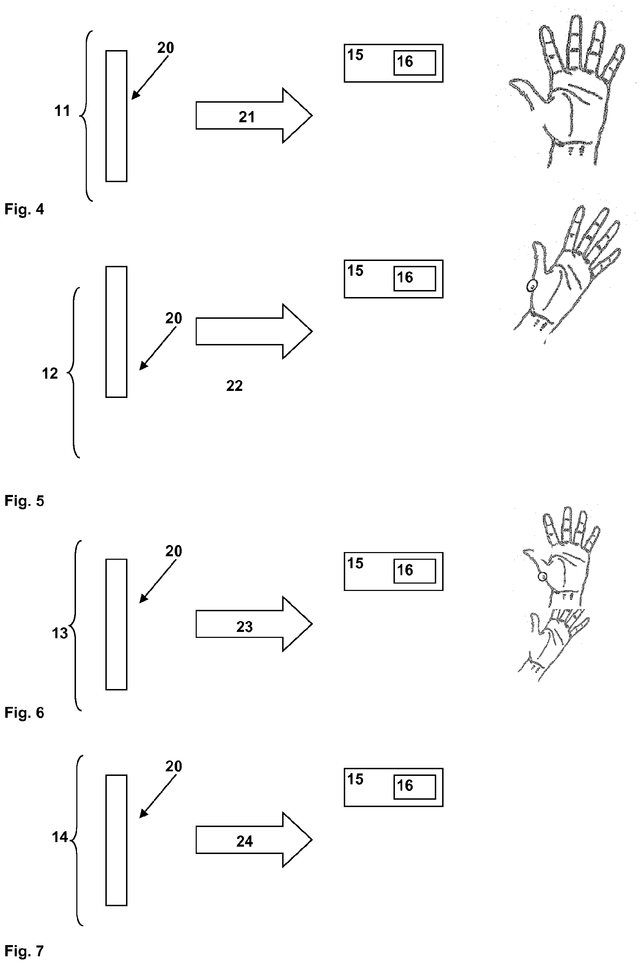

In den Figuren 4 bis 7 sind schematisch verschiedene Szenarien verschiedener Betriebsmodi der Multimedia-Einrichtung 10 dargestellt.

In einem in Figur 4 schematisch dargestellten ersten Betriebsmodus 11 ist es vorgesehen, dass erste Auswahlinformationen 21 entweder an der Anzeigeeinrichtung 20 dargestellt werden bzw. von der Multimedia-Einrichtung 10 ausgesandt werden. Dies ist erfindungsgemäß jedoch lediglich dann der Fall, wenn für den Fall einer Benutzung der Steuerungseinrichtung 15 eine Erkennung von biometrischen Daten durch die Erkennungseinrichtung 17 und unter Benutzung des biometrischen Sensors 16 derart vorgesehen ist, dass ein erster Datensatz biometrischer Daten erkannt wird bzw. die detektierten biometrischen Daten dem ersten Datensatz biometrischer Daten zuordenbar sind. Hierbei entspricht der erste Datensatz biometrischer Daten einer ersten Person, was im rechten Teil der Figur 4 in schematischer Weise mittels einer Handdarstellung dargestellt ist.

In einem in Figur 5 schematisch dargestellten zweiten Betriebsmodus 12 ist es vorgesehen, dass zweite Auswahlinformationen 22 entweder an der Anzeigeeinrichtung 20 dargestellt werden bzw. von der Multimedia-Einrichtung 10 ausgesandt werden. Dies ist erfindungsgemäß jedoch lediglich dann der Fall, wenn für den Fall einer Benutzung der Steuerungseinrichtung 15 eine Erkennung von biometrischen Daten durch die Erkennungseinrichtung 17 und unter Benutzung des biometrischen Sensors 16 derart vorgesehen ist, dass ein zweiter Datensatz biometrischer Daten erkannt wird bzw. die detektierten biometrischen Daten dem zweiten Datensatz biometrischer Daten zuordenbar sind. Hierbei entspricht der zweite Datensatz biometrischer Daten einer zweiten Person, was im rechten Teil der Figur 5 in schematischer Weise mittels einer gegenüber der Figur 4 unterschiedlichen Handdarstellung dargestellt ist.

In einem in Figur 6 schematisch dargestellten dritten Betriebsmodus 13 ist es vorgesehen, dass dritte Auswahlinformationen 23 entweder an der Anzeigeeinrichtung 20 dargestellt werden bzw. von der Multimedia-Einrichtung 10 ausgesandt werden. Dies ist erfindungsgemäß jedoch lediglich dann der Fall, wenn für den Fall einer Benutzung der Steuerungseinrichtung 15 eine Erkennung von biometrischen Daten durch die Erkennungseinrichtung 17 und unter Benutzung des biometrischen Sensors 16 derart vorgesehen ist, dass (innerhalb einer vergleichsweise kurzen Zeitspanne eines vorgegebenen Zeitintervalls von beispielsweise 30 Sekunden oder auch 2 Minuten) sowohl der erste Datensatz als auch der zweite Datensatz biometrischer Daten erkannt wird bzw. die detektierten biometrischen Daten dem ersten und zweiten Datensatz biometrischer Daten zuordenbar sind. Hierbei entspricht der erste Datensatz biometrischer Daten der ersten Person und der zweite Datensatz biometrischer Daten der zweiten Person, was im rechten Teil der Figur 6 in schematischer Weise mittels der in den Figuren 4 und 5 dargestellten Handdarstellungen (allerdings in Figur 6 verkleinert) dargestellt ist.

In einem in Figur 7 schematisch dargestellten weiteren Betriebsmodus 14 ist es vorgesehen, dass weitere Auswahlinformationen 24 entweder an der Anzeigeeinrichtung 20 dargestellt werden bzw. von der Multimedia-Einrichtung 10 ausgesandt werden. Dies ist erfindungsgemäß jedoch lediglich dann der Fall, wenn für den Fall einer Benutzung der Steuerungseinrichtung 15 eine Erkennung von biometrischen Daten durch die Erkennungseinrichtung 17 und unter Benutzung des biometrischen Sensors 16 nicht erfolgt, d.h. dass (im Ausführungsbeispiel von zwei personenindividuell der Multimedia-Einrichtung 10 bekannten Personen) weder der ersten Datensatz biometrischer Daten noch der zweite Datensatz biometrischer Daten erkannt wird bzw. die detektierten biometrischen Daten weder dem ersten Datensatz biometrischer Daten noch dem zweiten Datensatz biometrischer Daten zuordenbar sind. Dies ist im rechten Teil der Figur 7 in schematischer Weise mittels einer Darstellung ohne Handdarstellung dargestellt.

Erfindungsgemäß ist es vorgesehen, dass neben dem ersten und zweiten Betriebsmodus weitere personenspezifische Betriebsmodi vorhanden sind bzw. erkannt werden können, insbesondere für weitere Personen und dass neben dem dritten Betriebsmodus weitere gruppenbezogene Betriebsmodi vorhanden sind bzw. erkannt werden können, wobei die Teilnehmer der Gruppen sich untereinander auch überlappen können, wie das folgende einfache Beispiel deutlich macht: Falls neben dem ersten und zweiten Betriebsmodus ein vierter Betriebsmodus der Benutzung der Multimedia-Einrichtung durch eine dritte Person entspricht und der dritte Betriebsmodus der Benutzung der Multimedia-Einrichtung durch die erste und zweite Person entspricht, so ist es erfindungsgemäß vorteilhaft möglich, dass ein fünfter Betriebsmodus der Benutzung der Multimedia-Einrichtung durch die zweite und dritte Person entspricht und ein sechster Betriebsmodus der Benutzung der Multimedia-Einrichtung durch die dritte und erste Person entspricht.

Erfindungsgemäß ist es sowohl bei dem erfindungsgemäßen Verfahren als auch bei der erfindungsgemäßen Multimedia-Einrichtung in vorteilhafter Weise möglich, dass sowohl Bewegtbilddienste als auch weitere Dienste benutzerindividuell verfügbar gemacht werden können, beispielsweise Dienste von der Art "meine E-Mails", "meine Musik", "meine Bilder", "meine Videos". Herkömmlicherweise muss sich ein Benutzer zu Authentifizierung solcher Dienste registrieren und beispielsweise eine Ziffernkombination oder eine sonstige Authentifizierungsinformation eingeben, mittels der dann der Zugriff auf die individualisierten Dienste ermöglicht wird, ansonsten jedoch diese Dienste vor dem Zugriff anderer Personen geschützt sind. Erfindungsgemäß wird der Komfort bei der Nutzung von solchen Diensten ebenfalls wesentlich erhöht, weil beispielsweise durch einfaches In-die-Hand-Nehmen der Steuerungseinrichtung 15, insbesondere einer Fernbedienung, eine Authentifizierung bzw. Freigabe von Diensten erfolgen kann. Erfindungsgemäß ist es hierbei beispielsweise vorgesehen, dass der biometrische Sensor, welcher sich als Teil der Steuerungseinrichtung 15 in der Multimedia-Einrichtung befindet, ein großflächiges biometrisches Merkmal des Benutzers erkennt, insbesondere das Venenprofil, dass entsprechende Daten von der Steuerungseinrichtung, bevorzugt drahtlos, der Multimedia-Einrichtung 10 zur Verfügung gestellt werden, dass eine Erkennungseinrichtung 17 der Multimedia-Einrichtung 10 erkennt, um welche Person es sich handelt bzw. welchem Datensatz von gespeicherten biometrischen Daten innerhalb einer Speichereinrichtung 18 die aktuell empfangenen Daten entsprechen und beim Vorliegen einer ausreichenden Übereinstimmung die Multimedia-Einrichtung in den jeweiligen Betriebsmodus schaltet. Beispielsweise ist es vorgesehen, dass die Speichereinrichtung für biometrische Daten für eine Multimedia-Einrichtung 10 im Auslieferungszustand leer ist und mit der ersten Verwendung der Multimedia-Einrichtung 10 durch einen Benutzer befüllt wird. Wann immer nun Interaktionen mit der Steuerungseinrichtung 15 stattfinden, wird die Interaktion mit den vorhandenen biometrischen Daten in der Datenbank bzw. in der Speichereinrichtung 18 assoziiert. Dies kann von der Multimedia-Einrichtung genutzt werden, um die Bereitstellung von Multimedia-Informationen durch die Multimedia-Einrichtung zu individualisieren. Insbesondere kann erfindungsgemäß hierdurch die Authentifikation, beispielsweise über eine PIN-Nummer und insbesondere durch Eingabe und Darstellung einer Eingabeabfrage auf der Anzeigeeinrichtung 20, entfallen. Erfindungsgemäß ist es vorgesehen, dass die Multimedia-Einrichtung 10 eine nutzende Person individuell allein dadurch erkennt, dass eine Person bzw. ein Nutzer mit der Steuerungseinrichtung 15 bzw. insbesondere mit einer Fernbedienung interagiert.

Hierdurch ist es erfindungsgemäß insbesondere vorteilhaft möglich, dass weitere Multimedia-Dienste wie beispielsweise die Bereitstellung von Nachrichten, insbesondere E-Mail-Nachrichten, personenbezogene Musiksammlungen, personenbezogene Bildsammlungen und/oder personenbezogene Videosammlungen in einfacher Weise und insbesondere ohne explizite Benutzeraktion zur Verfügung gestellt werden können.

## Patentansprüche

1. Verfahren zum Betrieb einer Multimedia-Einrichtung (10), wobei die Multimedia-Einrichtung (10) eine Steuerungseinrichtung (15) aufweist, wobei die Multimedia-Einrichtung (10) wenigstens eine Anzeigeeinrichtung (20) aufweist oder dieser zugeordnet ist, wobei die Multimedia-Einrichtung (10) über eine Datenschnittstelle (6) von einem Telekommunikationsnetz (5) Multimedia-Daten empfängt,
wobei die Multimedia-Einrichtung (10) wenigstens in einem ersten Betriebsmodus (11) und in einem weiteren ersten Betriebsmodus (14) und in einem zweiten Betriebsmodus (12) und in einem dritten Betriebsmodus (13) betreibbar ist, wobei
im ersten Betriebsmodus (11) eine erste Auswahlinformation (21) an der Anzeigeeinrichtung (20) dargestellt oder von der Multimedia-Einrichtung (10) ausgesendet wird, wobei
im weiteren ersten Betriebsmodus (14) eine weitere Auswahlinformation (24) an der Anzeigeeinrichtung (20) dargestellt oder von der Multimedia-Einrichtung (10) ausgesendet wird,
wobei die Multimedia-Einrichtung (10) einen biometrischen Sensor (16) aufweist,
wobei der Multimedia-Einrichtung (10) eine Erkennungseinrichtung (17) für biometrische Daten und eine Speichereinrichtung (18) für biometrische Daten zugeordnet sind, wobei
in der Speichereinrichtung (18) für biometrische Daten wenigstens ein erster Datensatz biometrischer Daten gespeichert ist, wobei der erste Datensatz biometrischer Daten einer ersten Person zugeordnet ist,
-- wobei die Multimedia-Einrichtung (10) im ersten Betriebsmodus (11) betrieben wird für den Fall einer Benutzung der Steuerungseinrichtung (15) und,
-- einer Erkennung, unter Benutzung des biometrischen Sensors (16), von dem ersten Datensatz biometrischer Daten zuordenbarer biometrischer Daten durch die Erkennungseinrichtung (17) und
-- wobei die Multimedia-Einrichtung (10) im weiteren ersten Betriebsmodus (14) betrieben wird für den Fall einer Benutzung der Steuerungseinrichtung (15) und,
-- einer Erkennung, unter Benutzung des biometrischen Sensors (16), von dem ersten Datensatz biometrischer Daten verschiedener biometrischer Daten durch die Erkennungseinrichtung (17),
wobei
im zweiten Betriebsmodus (12) eine zweite Auswahlinformation (22) an der Anzeigeeinrichtung (20) dargestellt oder von der Multimedia-Einrichtung (10) ausgesendet wird,
wobei in der Speichereinrichtung (18) für biometrische Daten ein zweiter Datensatz biometrischer Daten gespeichert ist, wobei der zweite Datensatz biometrischer Daten einer zweiten Person zugeordnet ist,
-- wobei die Multimedia-Einrichtung (10) im zweiten Betriebsmodus (12) betrieben wird für den Fall einer Benutzung der Steuerungseinrichtung (15) und,
-- einer Erkennung, unter Benutzung des biometrischen Sensors (16), von dem zweiten Datensatz biometrischer Daten zuordenbarer biometrischer Daten durch die Erkennungseinrichtung (17) und
-- wobei die Multimedia-Einrichtung (10) im weiteren ersten Betriebsmodus (14) betrieben wird für den Fall einer Benutzung der Steuerungseinrichtung (15) und,
-- einer Erkennung, unter Benutzung des biometrischen Sensors (16), von dem ersten und zweiten Datensatz biometrischer Daten verschiedener biometrischer Daten durch die Erkennungseinrichtung (17),
wobei
im dritten Betriebsmodus (13) eine dritte Auswahlinformation (23) an der Anzeigeeinrichtung (20) dargestellt oder von der Multimedia-Einrichtung (10) ausgesendet wird,
-- wobei die Multimedia-Einrichtung (10) im dritten Betriebsmodus (13) betrieben wird für den Fall einer Benutzung der Steuerungseinrichtung (15) und,
-- einer Erkennung, unter Benutzung des biometrischen Sensors (16) und innerhalb eines vorgegebenen Zeitintervalls, von sowohl dem ersten Datensatz biometrischer Daten als auch dem zweiten Datensatz biometrischer Daten zuordenbarer biometrischer Daten durch die Erkennungseinrichtung (17), wobei die Speichereinrichtung (18) für biometrische Daten Teil des Telekommunikationsnetzes (5) ist.

2. Verfahren nach Anspruch 1, **dadurch gekennzeichnet, dass** mittels des biometrischen Sensors (16) ein im Vergleich zur Fläche eines menschlichen Fingerabdrucks großflächiges biometrisches Merkmal herangezogen wird, insbesondere die Venenstruktur eines Körperabschnitts oder ein Teil der Struktur der Hautoberfläche.

3. Verfahren nach einem der vorhergehenden Ansprüche, **dadurch gekennzeichnet, dass** der biometrische Sensor (16) in der Steuereinrichtung (15) vorgesehen ist.

4. Verfahren nach einem der vorhergehenden Ansprüche, **dadurch gekennzeichnet, dass** die Speichereinrichtung (18) für biometrische Daten in der Multimedia-Einrichtung (10), insbesondere in der Steuereinrichtung (15) vorgesehen ist.

5. Multimedia-Einrichtung (10) mit einer Steuerungseinrichtung (15), wobei die Multimedia-Einrichtung (10) wenigstens eine Anzeigeeinrichtung (20) aufweist oder dieser zugeordnet ist, wobei die Multimedia-Einrichtung (10) konfiguriert ist über eine Datenschnittstelle (6) von einem Telekommunikationsnetz (5) Multimedia-Daten zu empfangen,
wobei die Multimedia-Einrichtung (10) wenigstens in einem ersten Betriebsmodus (11) und in einem weiteren ersten Betriebsmodus (14) und in einem zweiten Betriebsmodus (12) und in einem dritten Betriebsmodus (13) betreibbar ist, wobei die Multimedia-Einrichtung (10) konfiguriert ist,
im ersten Betriebsmodus (11) eine erste Auswahlinformation (21) an der Anzeigeeinrichtung (20) darzustellen oder von der Multimedia-Einrichtung (10) auszusenden,
wobei die Multimedia-Einrichtung (10) konfiguriert ist,
im weiteren ersten Betriebsmodus (14) eine weitere Auswahlinformation (24) an der Anzeigeeinrichtung (20) darzustellen oder von der Multimedia-Einrichtung (10) auszusenden,
wobei die Multimedia-Einrichtung (10) einen biometrischen Sensor (16) aufweist, wobei der Multimedia-Einrichtung (10) eine Erkennungseinrichtung (17) für biometrische Daten und eine Speichereinrichtung (18) für biometrische Daten zugeordnet sind, wobei
in der Speichereinrichtung (18) für biometrische Daten wenigstens ein erster Datensatz biometrischer Daten gespeichert ist, wobei der erste Datensatz biometrischer Daten einer ersten Person zugeordnet ist,
-- wobei die Multimedia-Einrichtung (10) zum Betrieb im ersten Betriebsmodus (11) konfiguriert ist für den Fall einer Benutzung der Steuerungseinrichtung (15) und,
-- einer Erkennung, unter Benutzung des biometrischen Sensors (16), von dem ersten Datensatz biometrischer Daten zuordenbarer biometrischer Daten durch die Erkennungseinrichtung (17) und
-- wobei die Multimedia-Einrichtung (10) zum Betrieb im weiteren ersten Betriebsmodus (14) konfiguriert ist für den Fall einer Benutzung der Steuerungseinrichtung (15) und,
-- einer Erkennung, unter Benutzung des biometrischen Sensors (16), von dem ersten Datensatz biometrischer Daten verschiedener biometrischer Daten durch die Erkennungseinrichtung (17),
wobei die Multimedia-Einrichtung (10) konfiguriert ist,
im zweiten Betriebsmodus (12) eine zweite Auswahlinformation (22) an der Anzeigeeinrichtung (20) darzustellen oder von der Multimedia-Einrichtung (10) auszusenden,
wobei
in der Speichereinrichtung (18) für biometrische Daten ein zweiter Datensatz biometrischer Daten gespeichert ist, wobei der zweite Datensatz biometrischer Daten einer zweiten Person zugeordnet ist,
-- wobei die Multimedia-Einrichtung (10) zum Betrieb im zweiten Betriebsmodus (12) konfiguriert ist für den Fall einer Benutzung der Steuerungseinrichtung (15) und,
-- einer Erkennung, unter Benutzung des biometrischen Sensors (16), von dem zweiten Datensatz biometrischer Daten zuordenbarer biometrischer Daten durch die Erkennungseinrichtung (17) und
-- wobei die Multimedia-Einrichtung (10) zum Betrieb im weiteren ersten Betriebsmodus (14) konfiguriert ist für den Fall einer Benutzung der Steuerungseinrichtung (15) und,
-- einer Erkennung, unter Benutzung des biometrischen Sensors (16), von dem ersten und zweiten Datensatz biometrischer Daten verschiedener biometrischer Daten durch die Erkennungseinrichtung (17),
wobei die Multimedia-Einrichtung (10) konfiguriert ist,
im dritten Betriebsmodus (13) eine dritte Auswahlinformation (23) an der Anzeigeeinrichtung (20) darzustellen oder von der Multimedia-Einrichtung (10) auszusenden,
-- wobei die Multimedia-Einrichtung (10) im dritten Betriebsmodus (13) betrieben wird für den Fall einer Benutzung der Steuerungseinrichtung (15) und,
-- einer Erkennung, unter Benutzung des biometrischen Sensors (16) und innerhalb eines vorgegebenen Zeitintervalls, von sowohl dem ersten Datensatz biometrischer Daten als auch dem zweiten Datensatz biometrischer Daten zuordenbarer biometrischer Daten durch die Erkennungseinrichtung (17), wobei die Speichereinrichtung (18) für biometrische Daten Teil des Telekommunikationsnetzes (5) ist.

6. Multimedia-Einrichtung (10) nach Anspruch 5, **dadurch gekennzeichnet, dass** der biometrische Sensor (16) konfiguriert ist, ein im Vergleich zur Fläche eines menschlichen Fingerabdrucks großflächiges biometrisches Merkmal heranzuziehen, insbesondere die Venenstruktur eines Körperabschnitts oder ein Teil der Struktur der Hautoberfläche.

7. Multimedia-Einrichtung (10) nach einem der Ansprüche 5 oder 6, **dadurch gekennzeichnet, dass** der biometrische Sensor (16) in der Steuereinrichtung (15) vorgesehen ist.

8. Multimedia-Einrichtung (10) nach einem der Ansprüche 5 bis 7, **dadurch gekennzeichnet, dass** die Speichereinrichtung (18) für biometrische Daten Teil des Telekommunikationsnetzes (5) ist oder in der Multimedia-Einrichtung (10), insbesondere in der Steuereinrichtung (15), vorgesehen ist.

9. Computerprogramm mit Programmcodemitteln, mit deren Hilfe alle Schritte eines Verfahrens nach einem der Ansprüche 1 bis 4 durchführbar sind, wenn das Computerprogramm auf einer programmierbaren Einrichtung oder Multimedia-Einrichtung (10) ausgeführt wird.

10. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 4 durchführbar sind, wenn das Computerprogramm auf einer programmierbaren Einrichtung oder einer Multimedia-Einrichtung (10) ausgeführt wird.

## Claims

1. Method of operating a multimedia device (10), wherein the multimedia device (10) has a control device (15), wherein the multimedia device (10) has at least one display device (20) or is allocated thereto, wherein the multimedia device (10) receives multimedia data from a telecommunications network (5) via a data interface (6), wherein the multimedia device (10) can be operated at least in a first operating mode (11) and in a further first operating mode (14) and in a second operating mode (12) and in a third operating mode (13), wherein
in the first operating mode (11) a first item of selection information (21) is displayed on the display device (20) or is transmitted by the multimedia device (10), wherein
in the further first operating mode (14) a further item of selection information (24) is displayed on the display device (20) or is transmitted by the multimedia device (10),
wherein the multimedia device (10) has a biometric sensor (16),
wherein the multimedia device (10) is allocated a recognition device (17) for biometric data and a memory device (18) for biometric data, wherein
the memory device (18) for biometric data stores at least a first data set of biometric data, wherein the first data set of biometric data is allocated to a first person,
- wherein the multimedia device (10) is operated in the first operating mode (11) in the event of a use of the control device (15) and,
- a recognition, using the biometric sensor (16), of biometric data which can be allocated to the first data set of biometric data, by the recognition device (17) and
- wherein the multimedia device (10) is operated in the further first operating mode (14) in the event of a use of the control device (15) and,
- a recognition, using the biometric sensor (16), of biometric data different from the first data set of biometric data, by the recognition device (17),
wherein
in the second operating mode (12) a second item of selection information (22) is displayed on the display device (20) or is transmitted by the multimedia device (10),
wherein the memory device (18) for biometric data stores a second data set of biometric data, wherein the second data set of biometric data is allocated to a second person,
- wherein the multimedia device (10) is operated in the second operating mode (12) in the event of a use of the control device (15) and,
- a recognition, using the biometric sensor (16), of biometric data which can be allocated to the second data set of biometric data, by the recognition device (17) and
- wherein the multimedia device (10) is operated in the further first operating mode (14) in the event of a use of the control device (15) and,
- a recognition, using the biometric sensor (16), of biometric data different from the first and second data set of biometric data, by the recognition device (17),
wherein
in the third operating mode (13) a third item of selection information (23) is displayed on the display device (20) or is transmitted by the multimedia device (10),
- wherein the multimedia device (10) is operated in the third operating mode (13) in the event of a use of the control device (15) and,
- a recognition, using the biometric sensor (16) and within a specified time interval, of biometric data which can be allocated both to the first data set of biometric data and the second set of biometric data, by the recognition device (17), wherein the memory device (18) for biometric data is part of the telecommunications network (5).

2. Method as claimed in claim 1, **characterised in that** the biometric sensor (16) utilises a biometric feature which has a large area in comparison with the area of a human fingerprint, in particular the vein structure of a body portion or a part of the structure of the skin surface.

3. Method as claimed in any one of the preceding claims, **characterised in that** the biometric sensor (16) is provided in the control device (15).

4. Method as claimed in any one of the preceding claims, **characterised in that** the memory device (18) for biometric data is provided in the multimedia device (10), in particular in the control device (15).

5. Multimedia device (10) comprising a control device (15), wherein the multimedia device (10) has at least one display device (20) or is allocated thereto, wherein the multimedia device (10) is configured to receive multimedia data from a telecommunications network (5) via a data interface (6),
wherein the multimedia device (10) can be operated at least in a first operating mode (11) and in a further first operating mode (14) and in a second operating mode (12) and in a third operating mode (13), wherein the multimedia device (10) is configured
in the first operating mode (11) to display a first item of selection information (21) on the display device (20) or transmit same by the multimedia device (10),
wherein the multimedia device (10) is configured
in the further first operating mode (14) to display a further item of selection information (24) on the display device (20) or transmit same by the multimedia device (10),
wherein the multimedia device (10) has a biometric sensor (16),
wherein the multimedia device (10) is allocated a recognition device (17) for biometric data and a memory device (18) for biometric data, wherein
the memory device (18) for biometric data stores at least a first data set of biometric data, wherein the first data set of biometric data is allocated to a first person,
- wherein the multimedia device (10) is configured for operation in the first operating mode (11) in the event of a use of the control device (15) and,
- a recognition, using the biometric sensor (16), of biometric data which can be allocated to the first data set of biometric data, by the recognition device (17) and
- wherein the multimedia device (10) is configured for operation in the further first operating mode (14) in the event of a use of the control device (15) and,
- a recognition, using the biometric sensor (16), of biometric data different from the first data set of biometric data, by the recognition device (17), wherein the multimedia device (10) is configured in the second operating mode (12) to display a second item of selection information (22) on the display device (20) or transmit same by the multimedia device (10),
wherein
the memory device (18) for biometric data stores a second data set of biometric data, wherein the second data set of biometric data is allocated to a second person,
- wherein the multimedia device (10) is configured for operation in the second operating mode (12) in the event of a use of the control device (15) and,
- a recognition, using the biometric sensor (16), of biometric data which can be allocated to the second data set of biometric data, by the recognition device (17) and
- wherein the multimedia device (10) is configured for operation in the further first operating mode (14) in the event of a use of the control device (15) and,
- a recognition, using the biometric sensor (16), of biometric data different from the first and second data set of biometric data, by the recognition device (17),
wherein the multimedia device (10) is configured in the third operating mode (13) to display a third item of selection information (23) on the display device (20) or transmit same by the multimedia device (10),
- wherein the multimedia device (10) is operated in the third operating mode (13) in the event of a use of the control device (15) and,
- a recognition, using the biometric sensor (16) and within a specified time interval, of biometric data which can be allocated both to the first data set of biometric data and the second set of biometric data, by the recognition device (17), wherein the memory device (18) for biometric data is part of the telecommunications network (5).

6. Multimedia device (10) as claimed in claim 5, **characterised in that** the biometric sensor (16) is configured to utilise a biometric feature which has a large area in comparison with the area of a human fingerprint, in particular the vein structure of a body portion or a part of the structure of the skin surface.

7. Multimedia device (10) as claimed in any one of claims 5 or 6, **characterised in that** the biometric sensor (16) is provided in the control device (15).

8. Multimedia device (10) as claimed in any one of claims 5 to 7, **characterised in that** the memory device (18) for biometric data is part of the telecommunications network (5) or is provided in the multimedia device (10), in particular in the control device (15).

9. Computer program comprising program code means, with the aid of which all of the steps of a method as claimed in any one of claims 1 to 4 can be carried out when the computer program is executed on a programmable device or multimedia device (10).

10. Computer program product comprising a computer-readable medium and a computer program which is stored on the computer-readable medium and comprises program code means, which are suitable for performing all of the steps of a method as claimed in any one of claims 1 to 4 when the computer program is executed on a programmable device or a multimedia device (10).

## Revendications

1. Procédé de fonctionnement d'un moyen multimédia (10), le moyen multimédia (10) présentant un moyen de commande (15), le moyen multimédia (10) présentant au moins un moyen d'affichage (20) ou étant associé à celui-ci, le moyen multimédia (10) recevant des données multimédia d'un réseau de télécommunication (5) par le biais d'une interface de données (6),
dans lequel le moyen multimédia (10) peut fonctionner au moins dans un premier mode de fonctionnement (11) et dans un autre premier mode de fonctionnement (14) et dans un deuxième mode de fonctionnement (12) et dans un troisième mode de fonctionnement (13), dans lequel
dans le premier mode de fonctionnement (11) une première information de sélection (21) est représentée sur le moyen d'affichage (20) ou est émise par le moyen multimédia (10), dans lequel
dans l'autre premier mode de fonctionnement (14) une autre information de sélection (24) est représentée sur le moyen d'affichage (20) ou est émise par le moyen multimédia (10),
dans lequel le moyen multimédia (10) présente un capteur biométrique (16),
dans lequel un moyen d'identification (17) des données biométriques et un moyen de mémorisation (18) des données biométriques sont associés au moyen multimédia (10), dans lequel
dans le moyen de mémorisation (18) des données biométriques au moins un premier paquet de données biométriques est mémorisé, dans lequel le premier paquet de données biométriques est associé à une première personne,
- dans lequel le moyen multimédia (10) fonctionne dans le premier mode de fonctionnement (11) dans le cas d'une utilisation du moyen de commande (15) et,
- d'une identification, en utilisant le capteur biométrique (16), des données biométriques qui peuvent être associées par le premier paquet de données biométriques par le biais du moyen d'identification (17) et
- dans lequel le moyen multimédia (10) fonctionne dans l'autre premier mode de fonctionnement (14) dans le cas d'une utilisation du moyen de commande (15) et,
- d'une identification, en utilisant le capteur biométrique (16), de données biométriques différentes du premier paquet de données biométriques par le biais du moyen d'identification (17),
dans lequel
dans le deuxième mode de fonctionnement (12) une deuxième information de sélection (22) est représentée sur le moyen d'affichage (20) ou est émise par le moyen multimédia (10),
dans lequel dans le moyen de mémorisation (18) des données biométriques un deuxième paquet de données biométriques est mémorisé, dans lequel le deuxième paquet de données biométriques est associé à une deuxième personne,
- dans lequel le moyen multimédia (10) fonctionne dans le deuxième mode de fonctionnement (12) dans le cas d'une utilisation du moyen de commande (15) et,
- d'une identification, en utilisant le capteur biométrique (16), de données biométriques qui peuvent être associées par le deuxième paquet de données biométriques par le biais du moyen d'identification (17) et
- dans lequel le moyen multimédia (10) fonctionne dans l'autre premier mode de fonctionnement (14) dans le cas d'une utilisation du moyen de commande (15) et,
- d'une identification, en utilisant le capteur biométrique (16), de données biométriques différentes du premier et du deuxième paquet de données biométriques par le biais du moyen d'identification (17),
dans lequel
dans le troisième mode de fonctionnement (13) une troisième information de sélection (23) est représentée sur le moyen d'affichage (20) ou est émise par le moyen multimédia (10),
- dans lequel le moyen multimédia (10) fonctionne dans le troisième mode de fonctionnement (13) dans le cas d'une utilisation du moyen de commande (15) et,
- d'une identification, en utilisant le capteur biométrique (16) et à l'intérieur d'un intervalle de temps prédéterminé, de données biométriques qui peuvent être associées aussi bien par le premier paquet de données biométriques que par le deuxième paquet de données biométriques par le biais du moyen d'identification (17), dans lequel le moyen de mémorisation (18) des données biométriques fait partie du réseau de télécommunication (5).

2. Procédé selon la revendication 1, **caractérisé en ce que**, à l'aide du capteur biométrique (16), une caractéristique biométrique de grande surface est considérée par rapport à la surface d'une empreinte digitale humaine, en particulier la structure veineuse d'une partie du corps ou une partie de la structure de la surface de la peau.

3. Procédé selon une des revendications précédentes, **caractérisé en ce que** le capteur biométrique (16) est prévu dans le moyen de commande (15).

4. Procédé selon une des revendications précédentes, **caractérisé en ce que** le moyen de mémorisation (18) des données biométriques est prévu dans le moyen multimédia (10), en particulier dans le moyen de commande (15).

5. Moyen multimédia (10) avec un moyen de commande (15), le moyen multimédia (10) présentant au moins un moyen d'affichage (20) ou étant associé à celui-ci, le moyen multimédia (10) étant configuré pour recevoir des données multimédia d'un réseau de télécommunication (5) par le biais d'une interface de données (6),
dans lequel le moyen multimédia (10) peut fonctionner au moins dans un premier mode de fonctionnement (11) et dans un autre premier mode de fonctionnement (14) et dans un deuxième mode de fonctionnement (12) et dans un troisième mode de fonctionnement (13), dans lequel le moyen multimédia (10) est configuré,
dans le premier mode de fonctionnement (11), pour représenter une première information de sélection (21) sur le moyen d'affichage (20) ou émettre celle-ci par le moyen multimédia (10),
dans lequel le moyen multimédia (10) est configuré,
dans l'autre premier mode de fonctionnement (14), pour représenter une autre information de sélection (24) sur le moyen d'affichage (20) ou émettre celle-ci par le moyen multimédia (10),
dans lequel le moyen multimédia (10) présente un capteur biométrique (16), un moyen d'identification (17) des données biométriques et un moyen de mémorisation (18) des données biométriques étant associés au moyen multimédia (10), dans lequel
dans le moyen de mémorisation (18) des données biométriques au moins un premier paquet de données biométriques est mémorisé, dans lequel le premier paquet de données biométriques est associé à une première personne,
- dans lequel le moyen multimédia (10) est configuré pour fonctionner dans le premier mode de fonctionnement (11) dans le cas d'une utilisation du moyen de commande (15) et,
- d'une identification, en utilisant le capteur biométrique (16), de données biométriques qui peuvent être associées par le premier paquet de données biométriques par le biais du moyen d'identification (17) et
- dans lequel le moyen multimédia (10) est configuré pour fonctionner dans l'autre premier mode de fonctionnement (14) dans le cas d'une utilisation du moyen de commande (15) et,
- d'une identification, en utilisant le capteur biométrique (16), de données biométriques différentes du premier paquet de données biométriques par le biais du moyen d'identification (17),
dans lequel le moyen multimédia (10) est configuré,
dans le deuxième mode de fonctionnement (12), pour représenter une deuxième information de sélection (22) sur le moyen d'affichage (20) ou pour émettre celle-ci par le moyen multimédia (10),
dans lequel,
dans le moyen de mémorisation (18) des données biométriques un deuxième paquet de données biométriques est mémorisé, dans lequel le deuxième paquet de données biométriques est associé à une deuxième personne,
- dans lequel le moyen multimédia (10) est configuré pour fonctionner dans le deuxième mode de fonctionnement (12) dans le cas d'une utilisation du moyen de commande (15) et,
- d'une identification, en utilisant le capteur biométrique (16), de données biométriques qui peuvent être associées par le deuxième paquet de données biométriques par le biais du moyen d'identification (17) et
- dans lequel le moyen multimédia (10) est configuré pour fonctionner dans l'autre premier mode de fonctionnement (14) dans le cas d'une utilisation du moyen de commande (15) et,
- d'une identification, en utilisant le capteur biométrique (16), de données biométriques différentes du premier et du deuxième paquet de données biométriques par le biais du moyen d'identification (17),
dans lequel le moyen multimédia (10) est configuré,
dans le troisième mode de fonctionnement (13), pour représenter une troisième information de sélection (23) sur le moyen d'affichage (20) ou pour émettre celle-ci par le moyen multimédia (10),
- dans lequel le moyen multimédia (10) fonctionne dans le troisième mode de fonctionnement (13) dans le cas d'une utilisation du moyen de commande (15) et,
- d'une identification, en utilisant le capteur biométrique (16) et à l'intérieur d'un intervalle de temps prédéterminé, de données biométriques qui peuvent être associées aussi bien par le premier paquet de données biométriques que par le deuxième paquet de données biométriques par le biais du moyen d'identification (17), dans lequel le moyen de mémorisation (18) des données biométriques fait partie du réseau de télécommunication (5).

6. Moyen multimédia (10) selon la revendication 5, **caractérisé en ce que** le capteur biométrique (16) est configuré pour considérer une caractéristique biométrique de grande surface par rapport à la surface d'une empreinte digitale humaine, en particulier la structure veineuse d'une partie du corps ou une partie de la structure de la surface de la peau.

7. Moyen multimédia (10) selon une des revendications 5 ou 6, **caractérisé en ce que** le capteur biométrique (16) est prévu dans le moyen de commande (15).

8. Moyen multimédia (10) selon une des revendications 5 à 7, **caractérisé en ce que** le moyen de mémorisation (18) des données biométriques fait partie du réseau de télécommunication (5) ou est prévu dans le moyen multimédia (10), en particulier dans le moyen de commande (15).

9. Programme informatique comprenant des moyens de codes de programme qui permettent de mettre en oeuvre toutes les étapes d'un procédé selon une des revendications 1 à 4 lorsque le programme informatique est exécuté sur un moyen programmable ou un moyen multimédia (10).

10. Produit de programme informatique comprenant un support lisible par ordinateur et un programme informatique mémorisé sur le support lisible par ordinateur avec des moyens de codes de programme, qui sont conçus de manière à pouvoir mettre en oeuvre toutes les étapes d'un procédé selon une des revendications 1 à 4 lorsque le programme informatique est exécuté sur un moyen programmable ou un moyen multimédia (10).
